# EUROPEAN PATENT SPECIFICATION

(11) **EP 3 531 766 B1**
(45) Date of publication and mention of the grant of the patent: **16.02.2022**
(21) Application number: 17866964.4
(22) Date of filing: 03.11.2017
(51) Int. Cl.: H04L 5/00, H04W 72/04

(54) **CONTROL INFORMATION DETECTION METHOD AND TRANSMISSION METHOD, AND DEVICE**
VERFAHREN ZUR ERKENNUNG VON STEUERUNGSINFORMATIONEN SOWIE SENDEVERFAHREN UND VORRICHTUNG
PROCÉDÉ DE DÉTECTION ET PROCÉDÉ DE TRANSMISSION D'INFORMATIONS DE COMMANDE, ET DISPOSITIF

(30) Priority: 03.11.2016 CN 201610959479
(43) Date of publication of application: 28.08.2019
(73) Proprietor: Huawei Technologies Co., Ltd., Longgang District Shenzhen, Guangdong 518129 (CN)
(72) Inventor: LI, Chaojun, Shenzhen Guangdong 518129 (CN); SHAO, Jiafeng, Shenzhen Guangdong 518129 (CN); CHENG, Yan, Shenzhen Guangdong 518129 (CN)
(74) Representative: Pfenning, Meinig & Partner mbB
(86) International application number: PCT/CN2017/109243
(87) International publication number: WO 2018/082636

(56) References cited:
- WO-A1-2016/064059
- US-A1- 2016 128 028
- HUAWEI ET AL: "Discussion on CRS based sPDCCH", 3GPP DRAFT; R1-1608632, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 1 October 2016 (2016-10-01), XP051158988, Retrieved from the Internet: URL:http://www.3gpp.org/ftp/tsg_ran/WG1_RL 1/TSGR1_86b/Docs/ [retrieved on 2016-10-01]
- INTEL CORPORATION: "On sPDCCH design for shoten TTI", 3GPP DRAFT; R1-1609486, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 9 October 2016 (2016-10-09), XP051149525, Retrieved from the Internet: URL:http://www.3gpp.org/ftp/Meetings_3GPP_ SYNC/RAN1/Docs/ [retrieved on 2016-10-09]
- ERICSSON: "sPDCCH search space design", 3GPP DRAFT; R1-1610322, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 30 September 2016 (2016-09-30), XP051158673, Retrieved from the Internet: URL:http://www.3gpp.org/ftp/tsg_ran/WG1_RL 1/TSGR1_86b/Docs/ [retrieved on 2016-09-30]

## Description

### TECHNICAL FIELD

This application relates to the wireless communications field, and in particular, to a control information detection method, a control information sending method, and a device.s

### BACKGROUND

A network device configures scheduling information such as time-frequency resource allocation or a modulation and coding scheme for a terminal device. In addition, the network device also needs to notify the terminal device of power control command information related to uplink transmission. The scheduling information and the power control command information are referred to as downlink control information (downlink control information, DCI).

In a Long Term Evolution (long term evolution, LTE) system, the network device mainly uses a physical downlink control channel (physical downlink control channel, PDCCH) to carry DCI. In a current wireless communications system, for both a PDCCH and an enhanced physical downlink control channel (enhanced PDCCH, ePDCCH), a length of a transmission time interval (transmission time interval, TTI) is 1 ms during DCI transmission.

In the wireless communications system, a latency (latency) is an important factor affecting user experience. Constantly emerging new services, such as services related to the Internet of Vehicles, impose an increasingly high requirement on the latency. During DCI transmission performed based on the transmission time interval with the length of 1 ms, a relatively large scheduling latency is caused, and a low-latency service requirement cannot be met.

HUAWEI ET AL: "Discussion on CRS based SPDCCH", 3GPP DRAFT; R1-1608632, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no, Lisbon, Portugal; 20161010-20161014 1 October 2016 (2016-10-01), XP051158988, Retrieved from the Internet: URL: http://www 3gpp.org/ftp/tsg_ran/WG1 RLI/TSGRI 86b/Docs/ [retrieved on 2016-10-01] discloses a method on sDCI design carried on legacy PDCCH, in details, The PRB set of sPDCCH can be indicated by higher layers or slow DCI if two-level DCI is adopted, and some sPDCCH configuration information such as aggregation level (AL) can be signaled in slow DCI.

INTEL CORPORATION: "On sPDCCH Design for shorten TTI", 3GPP DRAFT, R1-1609486, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no, Lisbon, Portugal; 20161010-20161014 9 October 2016 (2016-10-09), XP0511449525, Retrieved from the Internet: URL: http://www 3gpp.org/ftp/Meetings_3GPP_SYNC/RAN1/Docs/ [retrieved on 2016-10-09] discloses a method of sPDCCH design, including proposals to reuse the PDCCH design principles as much as possible for distributed S-PDCCH and reduce the number of aggregation levels and the corresponding candidates for S-PDCCH monitoring by RRC signaling.

ERRISON: "sPDCCH search space desgin",3GPP DRAFT; R1-1610322, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no, Lisbon, Portugal; 20161010-20161014 30 September 2016 (2016-09-30), XP051158673, Retrieved from the Internet: URL: http://www 3gpp.org/ftp/tsg_ran/WG1 RLI/TSGRI 86b/Docs/ [retrieved on 2016-09-30] discloses a method to limit the number of blind decodes for sTTI Ues, e.g. defining overlapping USS in sPDCCH for all fast DCI, being configured by RRC to monitor an "sTTI-RNTI" for slow DCI in the common search space, assuming the same AL for all fast DCIs sent in sPDCCH within the same, etc.

### SUMMARY

The present invention is defined by the appended claims.

According to the method or device described in embodiments of this application, for data transmission with a low latency requirement, a search space is relatively small, and there is a small quantity of blind detections, so that scheduling information can be rapidly obtained, thereby improving a data processing speed.

### BRIEF DESCRIPTION OF DRAWINGS

To describe the technical solutions in this application more clearly, the following briefly describes the accompanying drawings required for describing the embodiments. Apparently, a person of ordinary skill in the art may derive other drawings from these accompanying drawings without creative efforts.
FIG. 1 is a schematic flowchart of an embodiment of a control information detection method according to this application;
FIG. 2 is a schematic flowchart of an embodiment of a control information sending method according to this application;
FIG. 3 is a schematic structural diagram of an embodiment of a terminal device according to this application;
FIG. 4 is a schematic structural diagram of an embodiment of a network device according to this application;
FIG. 5 is a schematic structural diagram of another embodiment of a terminal device according to this application; and
FIG. 6 is a schematic structural diagram of another embodiment of a network device according to this application.

### DESCRIPTION OF EMBODIMENTS

The embodiments of this application may be applied to a wireless communications system including a network device and a terminal device (a terminal device or terminal equipment), for example, an LTE system, or another wireless communications system using various radio access technologies, for example, a system using access technologies such as Code Division Multiple Access, Frequency Division Multiple Access, Time Division Multiple Access, orthogonal frequency division multiple access, or single carrier frequency division multiple access, or a subsequently evolved system, such as a fifth generation (5G) system.

Specifically, the embodiments of this application may be applied to data transmission between a terminal device and a network device, or data transmission between terminal devices, or data transmission between network devices. The terminal device may be a device that provides a user with voice or data connectivity, a handheld device with a wireless connection function, or another processing device connected to a wireless modem. A wireless terminal may communicate with one or more core networks through a radio access network (radio access network, RAN). The wireless terminal may be a mobile terminal, such as a mobile phone (or referred to as a "cellular" phone) and a computer with a mobile terminal, for example, may be a portable, pocket-sized, handheld, computer built-in, or in-vehicle mobile apparatus, that exchanges voice and/or data with the radio access network. For example, the wireless terminal may be a device such as a personal communication service (personal communication service, PCS) phone, a cordless telephone set, a Session Initiation Protocol (session initiation protocol, SIP) phone, a wireless local loop (wireless local loop, WLL) station, or a personal digital assistant (personal digital assistant, PDA). The wireless terminal may also be referred to as a system, a subscriber unit (subscriber unit, SU), a subscriber station (subscriber station, SS), a mobile station (mobile station, MS), a remote station (remote station, RS), an access point (access point, AP), a remote terminal (remote terminal, RT), an access terminal (access terminal, AT), a user terminal (user terminal, UT), a user agent (user agent, UA), a user device, or user equipment (user equipment, UE).

The network device in the embodiments of this application may be a base station, or an access point, or may be a device that is in an access network and that communicates with the wireless terminal by using one or more sectors on an air interface. The base station may be configured to mutually convert a received over-the-air frame and an IP packet and serve as a router between the wireless terminal and a remaining part of the access network, where the remaining part of the access network may include an Internet protocol (Internet protocol, IP) network. The base station may also coordinate attribute management of the air interface. For example, the base station may be a 5G gNodeB (gNB, gNodeB), or may be an evolved NodeB (eNB or eNodeB, evolved NodeB) in LTE, or even may be a base transceiver station (Base Transceiver Station, BTS) in a GSM or CDMA or a NodeB (NodeB) in WCDMA. This is not limited in this application.

For ease of description of the technical solutions of this application, the following first describes some concepts in this application.

In the embodiments of this application, each radio frame includes 10 subframes (subframe) with a length of 1 ms, and each subframe includes two slots (slot). For a normal cyclic prefix (normal cyclic prefix, normal CP), each slot includes seven symbols (symbol), to be specific, each slot includes symbols numbered {#0, #1, #2, #3, #4, #5, #6}. For an extended CP (extended cyclic prefix, extended CP), each slot includes six symbols (symbol), to be specific, each slot includes symbols numbered {#0, #1, #2, #3, #4, #5}. For ease of description, in the embodiments of this application, both an uplink symbol and a downlink symbol are symbols. The uplink symbol may be referred to as a single carrier frequency division multiple access (single carrier frequency division multiple access, SC-FDMA) symbol, and a downlink symbol may be referred to as an orthogonal frequency division multiplexing (orthogonal frequency division multiplexing, OFDM) symbol. It should be noted that, in a wireless communications system, an uplink multiple access mode of orthogonal frequency division multiple access (orthogonal frequency division multiple access, OFDMA) is used, and the uplink symbol may alternatively be referred to as another type of symbol, for example, an OFDM symbol. An uplink multiple access mode and a downlink multiple access mode are not limited in the embodiments of this application.

In the embodiments of this application, DCI is used to indicate data transmission, or DCI is used schedule data transmission. For example, the DCI may be used to schedule physical uplink shared channel (physical uplink shared channel, PUSCH) transmission or used to schedule physical downlink shared channel (physical downlink shared channel, PDSCH) transmission. Although the DCI is used to schedule data transmission, the DCI may be used only to indicate scheduling information of data transmission, and not used to trigger the data transmission. Before transmitting data, the terminal device needs to detect DCI sent by the network device to the terminal device. A downlink control channel carrying the DCI is a candidate downlink control channel in a search space. Therefore, the terminal device needs to determine the search space.

In the embodiments of this application, the downlink control channel is a channel for carrying the DCI. In other words, the DCI is carried on the downlink control channel, or the DCI is carried by the downlink control channel. The downlink control channel may be obtained by aggregating L control channel elements (control channel element, CCE), where L is a positive integer and referred to as an aggregation level (aggregation level, AL). For example, for a PDCCH, L may be 1, 2, 4, or 8. In other words, an aggregation level of the downlink control channel is 1, 2, 4, or 8.

In the embodiments of this application, the search space includes one or more candidate downlink control channels, and each candidate downlink control channel can be used to carry DCI. Briefly, the search space is a set of candidate downlink control channels. The terminal device needs to listen to a candidate downlink control channel. Therefore, the search space is a set of candidate downlink control channels that the terminal device listens to. For example, the search space includes one or more PDCCHs, and in this case, the search space may be referred to as a PDCCH search space. For example, the search space includes one or more EPDCCHs, and in this case, the search space may be referred to as an EPDCCH search space.

The search space may include two types: a common search space (common search space, CSS) and a user equipment-specific search space (UE-specific search space, UESS). The CSS is a search space that a plurality of terminal devices in a cell need to listen to, and the UESS is a search space that a specific terminal device in a cell needs to listen to. Correspondingly, a PDCCH UESS is a UESS including a PDCCH defined in Rel-8, a PDCCH CSS is a CSS including a PDCCH defined in Rel-8, and an EPDCCH UESS is a UESS including an EPDCCH defined in Rel-11.

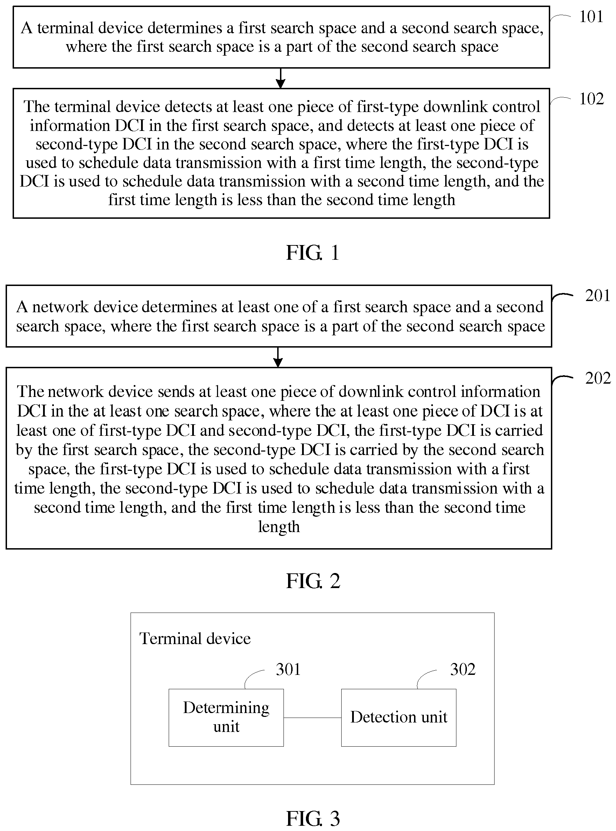

FIG. 1 is a schematic flowchart of an embodiment of a control information detection method. The method in this embodiment may be performed by a terminal device.

Step 101: The terminal device determines a first search space and a second search space, where the first search space is a part of the second search space.

The first search space is used to transmit at least one piece of first-type DCI, and the second search space is used to transmit at least one piece of second-type DCI. The first-type DCI is used to schedule first data with a first time length, the second-type DCI is used to schedule second data with a second time length, and the first time length is less than the second time length. The first data may be first downlink data or first uplink data, and the second data is second downlink data or second uplink data. Optionally, the first downlink data or the second downlink data may be data carried on a PDSCH, and the first uplink data or the second uplink data may be data carried on a PUSCH.

Based on different latency requirements of actually transmitted data services, the first time length and the second time length may each have a different value. Specifically, the first time length is less than the second time length. Optionally, the second time length is 1 ms, and the first time length is two symbols or three symbols; or the second time length is 1 ms, and the first time length is one symbol, two symbols, or three symbols; or the second time length is 1 ms, and the first time length is one symbol or two symbols; or the second time length is 1 ms, and the first time length is four symbols; or the second time length is 1 ms, and the first time length is seven symbols; or the second time length is 1 ms, and the first time length is six symbols.

It should be noted that, in the embodiments of this application, although the second time length is 1 ms, an actual transmission time length of the data transmission with the first time length in the embodiments of this application may be less than 1 ms. Although various physical channels in an LTE system are designed with a TTI length of 1 ms, a time domain resource occupied by actual data transmission may be less than 1 ms. For example, the first one, two, three, or four symbols in a downlink subframe may be used to transmit a PDCCH. Therefore, a time domain resource occupied by downlink data transmission (for example, PDSCH transmission) with a TTI length of 1 ms may be less than 1 ms. For another example, a last one symbol in an uplink subframe may be used to transmit an SRS (Sounding Reference Signal, sounding reference signal). Therefore, a time domain resource occupied by uplink data transmission (for example, PUSCH transmission) with a TTI length of 1 ms may also be less than 1 ms.

Optionally, the second search space may include a PDCCH CSS and a PDCCH UESS.

The PDCCH CSS includes four candidate control channels with an aggregation level of 4 or two candidate control channels with an aggregation level of 8. The PDCCH CSS includes the first 16 control channel elements (control channel element, CCE) in a PDCCH region. The PDCCH UESS includes six candidate control channels with an aggregation level of 1, six candidate control channels with an aggregation level of 2, two candidate control channels with an aggregation level of 4, and two candidate control channels with an aggregation level of 8. The PDCCH UESS is located in the PDCCH region, and a start location in the PDCCH region is determined based on a terminal device-specific radio network temporary identifier (radio network temporary identifiers, RNTI).

When a downlink system bandwidth is greater than 10 resource blocks (resource block, RB), the PDCCH region is the first one to three OFDM symbols of each subframe. When the downlink system bandwidth is less than or equal to 10 RBs, the PDCCH region is the first two to four symbols of each subframe. A quantity of symbols of the PDCCH region may be indicated by using a physical control format indicator channel (physical control format indicator channel, PCFICH) or higher layer signaling. Because a latency requirement of data transmission of 1 ms is not high, a search space that is the same as that in the prior art is used. Compared with the prior art, a quantity of PDCCH blind detections for searching for DCI used to schedule the data transmission of 1 ms remains unchanged, and therefore, there no impact on the data transmission of 1 ms.

Optionally, the first search space may also include some candidate control channels in the PDCCH UESS.

Optionally, the first search space may include the entire PDCCH CSS and some candidate control channels in the PDCCH UESS.

Optionally, the first search space is the PDCCH CSS.

A search space including some candidate control channels in the PDCCH UESS may include at least one of the following: a search space including A candidate control channels with an aggregation level of 1 in the PDCCH UESS; a search space including B candidate control channels with an aggregation level of 2 in the PDCCH UESS; a search space including C candidate control channels with an aggregation level of 4 in the PDCCH UESS; and a search space including D candidate control channels with an aggregation level of 8 in the PDCCH UESS.

Further, the search space including some candidate control channels in the PDCCH UESS includes at least one of the following search spaces: a search space including the first A candidate control channels with an aggregation level of 1 in the PDCCH UESS; a search space including the first B candidate control channels with an aggregation level of 2 in the PDCCH UESS; a search space including the first C candidate control channels with an aggregation level of 4 in the PDCCH UESS; and a search space including the first D candidate control channels with an aggregation level of 8 in the PDCCH UESS.

A is a positive integer less than 6, B is a positive integer less than 6, C is 1 or 2, and D is 1 or 2. For example, A=2, B=2, C=2, and D=2; or A=2, B=2, C=1, and D=1; or A=3, B=3, C=2, and D=2; or A=3, B=3, C=1, and D=1.

Optionally, the second search space includes the entire PDCCH CSS and a part of the PDCCH UESS. The part of the PDCCH UESS includes at least one of the following search spaces: a search space including E candidate control channels with an aggregation level of 1 in the PDCCH UESS; a search space including F candidate control channels with an aggregation level of 2 in the PDCCH UESS; a search space including G candidate control channels with an aggregation level of 4 in the PDCCH UESS; and a search space including H candidate control channels with an aggregation level of 8 in the PDCCH UESS. E is a positive integer greater than or equal to A and less than 6. F is a positive integer greater than or equal to B and less than 6. If C is 1, G is 1 or 2. If C is 2, G is 2. If D is 1, H is 1 or 2. If D is 2, H is 2.

The terminal device may determine the first search space and/or the second search space according to an indication of higher layer signaling.

Optionally, that the terminal device determines a first search space includes: determining, by the terminal device, the first search space based on higher layer signaling, where the higher layer signaling is used to indicate an aggregation level and/or a candidate control channel quantity of the first search space. For example, the higher layer signaling indicates at least one of A, B, C, and D.

Optionally, that the terminal device determines a second search space includes: determining, by the terminal device, the second search space based on higher layer signaling, where the higher layer signaling is used to indicate an aggregation level and/or a candidate control channel quantity of the second search space. For example, the higher layer signaling indicates at least one of E, F, G, and H.

Step 102: The terminal device detects at least one piece of first-type DCI in the first search space, and detects at least one piece of second-type DCI in the second search space.

After determining the first search space, the terminal device may detect at least one piece of first-type DCI in the first search space. After determining the second search space, the terminal device may detect at least one piece of second-type DCI in the second search space. The first-type DCI and the second-type DCI each include at least one piece of DCI.

Optionally, the first-type DCI includes at least first DCI, the at least one piece of second-type DCI includes second DCI, and an information bit quantity of the first DCI is the same as an information bit quantity of the second DCI. In other words, payload sizes (payload size) of the first DCI and the second DCI are the same. For example, the second DCI is in a DCI format 1A. In this case, that the terminal device detects at least one piece of second-type DCI in the second search space may include: detecting, by the terminal device, at least second DCI in the DCI format 1A in the second search space.

Optionally, the first-type DCI includes at least first DCI, and the at least one piece of second-type DCI includes DCI in a DCI format 1C, DCI in a DCI format 1A, DCI in a DCI format 3/3A, and fourth DCI. An information bit quantity of the first DCI is the same as an information bit quantity of the DCI in the DCI format 1A. In this case, that the terminal device detects at least one piece of second-type DCI in the second search space may include: detecting, by the terminal device, the DCI format 1C, the DCI format 1A, and the DCI format 3/3A in the PDCCH CSS; and detecting, by the terminal device, the DCI format 1A and the fourth DCI in the PDCCH UESS or a part of the PDCCH UESS. The fourth DCI may be a DCI format 1/1B/1C/1D/2/2A/2B/2C/2D/4/5/6.

The first search space is a part of the second search space, and the information bit quantity of the first DCI is the same as the information bit quantity of the second DCI (for example, when the second DCI is in the DCI format 1A). Therefore, the terminal device further needs to distinguish the first DCI and the second DCI during DCI detection.

There may be a plurality of methods for distinguishing the first DCI and the second DCI.

For example, the first DCI and the second DCI each include an information field for indicating a DCI type. The information field indicates whether DCI is first DCI or second DCI. In this way, the terminal device can distinguish different DCI by using information fields of the DCI.

For another example, different radio network temporary identifiers (radio network temporary identifiers, RNTI) are used to scramble the first DCI and the second DCI. In this way, the terminal device can distinguish different DCI by using different RNTIs.

For still another example, different masks (mask) may be used to scramble cyclic redundancy codes (cyclic redundancy code, CRC) of the first DCI and the second DCI. In this way, the terminal device can distinguish different DCI by using different masks.

Optionally, the first-type DCI includes at least the first DCI and third DCI, and the first DCI includes information instructs the terminal device to perform the data transmission with the first time length based on the third DCI. It should be noted that, the third DCI may also be referred to as slow DCI (slow DCI), and the first DCI may also be referred to as fast DCI (fast DCI). Optionally, an information bit quantity of the third DCI is the same as that of DCI in the DCI format 1A or the DCI format 1C.

For example, the third DCI includes information used to indicate a frequency domain resource occupied by the data transmission with the first time length, and the first DCI instructs the terminal device to perform the data transmission with the first time length on the frequency domain resource.

For example, the third DCI further includes sPDCCH (PDCCH for short TTI) configuration information, where a transmission time length of downlink data or uplink data scheduled by DCI carried on an sPDCCH is less than or equal to 0.5 ms. The sPDCCH configuration information indicates whether there is an sPDCCH region in a time unit (denoted as a time unit a) of a PDCCH region, or the sPDCCH configuration information indicates whether there is an sPDCCH region in a first time unit (denoted as a time unit b) after the PDCCH region. When the sPDCCH configuration information indicates that there is an sPDCCH region, the terminal device further needs to detect the first DCI in the sPDCCH region in the time unit a or b. Otherwise, the terminal device does not need to detect the first DCI in the sPDCCH region in the time unit a or b. The sPDCCH region and the PDCCH region do not overlap in both time domain and frequency domain. One downlink subframe may include at least two time units, and each time unit includes at least one symbol. For example, one subframe includes 14 symbols and is divided into six time units that respectively include three, two, two, two, two, and three symbols, or respectively include two, three, two, two, two, and three symbols, or respectively include two, two, three, two, two, and three symbols. For example, one subframe includes 14 symbols and is evenly divided into two time units. For example, the PDCCH region includes one symbol and is located in a first time unit. In this case, the sPDCCH configuration information indicates whether there is an sPDCCH region in the first time unit. For example, the PDCCH region includes two symbols and is located in a first time unit. In this case, the sPDCCH configuration information indicates whether there is an sPDCCH region in the first time unit (that is, a second time unit) after the PDCCH region. The sPDCCH configuration information may be configured based on load of the PDCCH region. If the load of the PDCCH region is relatively large, the sPDCCH configuration information may indicate that there is an sPDCCH region in the time unit a or b. In this way, the first DCI may alternatively be carried by an sPDCCH in the sPDCCH region. If the load of the PDCCH region is relatively small, the sPDCCH configuration information may indicate that there is no sPDCCH region in the time unit a or b. In this way, the first DCI can be carried only by a PDCCH in the PDCCH region, to avoid additional overheads of the sPDCCH region.

For example, the third DCI further includes UL grant (uplink grant) configuration information. The UL grant configuration information indicates a search space corresponding to a UL grant. The search space corresponding to the UL grant is located in the sPDCCH region. In this way, even if the terminal device receives no downlink data, the terminal device can still detect the UL grant in the search space corresponding to the UL grant, and further sends uplink data to a network device. Optionally, the search space corresponding to the UL grant is configured for a plurality of terminal devices, and the terminal device is one of the plurality of terminal devices.

Optionally, the third DCI is group-specific, that is, the third DCI is configured for a group of terminal devices, and therefore, is carried by using a candidate control channel in the PDCCH CSS. The terminal device is one terminal device in the group of terminal devices. The first DCI is terminal device-specific, and therefore, is carried by using a candidate control channel in the PDCCH UESS. Correspondingly, the first search space includes the entire PDCCH CSS and the search space including some candidate control channels in the PDCCH UESS.

When the first search space, as described above, includes the entire PDCCH CSS and some candidate control channels in the PDCCH UESS, and the first-type DCI includes the first DCI and the third DCI, that the terminal device detects at least one piece of first-type DCI in the first search space includes: detecting, by the terminal device, the third DCI in the PDCCH CSS; and detecting, by the terminal device, the first DCI in the search space including some candidate control channels in the PDCCH UESS; or detecting, by the terminal device, the first DCI in the search space including some candidate control channels in the PDCCH UESS if the terminal device detects the third DCI. Optionally, the third DCI includes the sPDCCH configuration information, and if the sPDCCH configuration information indicates that there is an sPDCCH region, the terminal device further needs to determine a fourth search space, and detect the first DCI in the fourth search space. The fourth search space is located in the sPDCCH region in the time unit a or b.

Optionally, the at least one piece of first-type DCI includes the third DCI. The third DCI is group-specific, and therefore, is carried by using a candidate control channel in the PDCCH CSS. In addition, the terminal device further needs to detect the first DCI, where the first DCI is terminal device-specific, and is carried by using either a candidate control channel in the PDCCH UESS or an sPDCCH in the sPDCCH region in the time unit a or b. Correspondingly, the terminal device determines that the first search space includes the PDCCH CSS. That the terminal device detects at least one piece of first-type DCI in the first search space includes: detecting, by the terminal device, the third DCI in the PDCCH CSS. After the terminal device detects and receives the third DCI, the terminal device determines a third search space based on sPDCCH configuration information included in the third DCI. This specifically includes: if the sPDCCH configuration information indicates that there is no sPDCCH region in a time unit a or b, the third search space includes a search space including some candidate control channels in the PDCCH UESS; or if the sPDCCH configuration information indicates that there is an sPDCCH region in a time unit a or b, the third search space is located in the sPDCCH region in the time unit a or b. After determining the third search space, the terminal device may further detect the first DCI in the third search space. For the first DCI, the third DCI, and the sPDCCH configuration information that are described in this paragraph, refer to the foregoing definitions.

It should be noted that, the terminal device does not determine the first search space and the second search space in a strict time sequence, and the terminal device may first determine the first search space and then determine the second search space, or first determine the second search space and then determine the first search space, or determine the first search space and the second search space at the same time. This is not limited in this application.

It can be learned from the foregoing embodiment that, for data transmission with a low latency requirement, a search space is relatively small, and there is a small quantity of blind detections, so that scheduling information can be rapidly obtained, thereby improving a data processing speed. In addition, a quantity of candidate control channels to be detected in the PDCCH region is not increased, and types of information bit quantities of detected DCI are not increased. Therefore, compared with the prior art, a quantity of PDCCH blind detections in the PDCCH region is not increased, and a processing time of the data transmission of 1 ms is not affected.

FIG. 2 is a schematic flowchart of an embodiment of a control information sending method according to this application. The method in this embodiment may be performed by a network device. As shown in FIG. 2, the embodiment may include the following steps.

Step 201: The network device determines at least one of a first search space and a second search space, where the first search space is a part of the second search space.

First-type DCI is used to schedule data transmission with a first time length, the second-type DCI is used to schedule data transmission with a second time length, and the first time length is less than the second time length.

For detailed content related to the first search space and the second search space, refer to the foregoing embodiment. Details are not described herein again.

Step 202: The network device sends at least one piece of downlink control information DCI in the at least one search space, where the at least one piece of DCI is at least one of first-type DCI and second-type DCI, the first-type DCI is carried by the first search space, and the second-type DCI is carried by the second search space.

Optionally, the at least one search space includes the first search space. In this case, after the network device determines the first search space, the network device may send at least one piece of first-type DCI in the first search space.

Optionally, the at least one search space includes the second search space. In this case, after the network device determines the second search space, the network device may send at least one piece of second-type DCI in the second search space.

Optionally, the at least one search space includes the first search space and the second search space. In this case, after the network device determines the first search space and the second search space, the network device may send at least one piece of first-type DCI in the first search space, and send at least one piece of second-type DCI in the second search space.

Optionally, if second DCI is in a DCI format 1A, the network device sends at least the second DCI in the DCI format 1A in the second search space.

Optionally, if the first search space includes a PDCCH CSS and a search space including some candidate control channels in a PDCCH UESS, the network device sends a third DCI in the PDCCH CSS, and sends first DCI in the search space including some candidate control channels in the PDCCH UESS. The network device may send the first DCI in the search space including some candidate control channels in the PDCCH UESS when sending the third DCI in the PDCCH CSS.

To enable the terminal device to determine the first search space, the network device may send higher layer signaling after determining the first search space. The higher layer signaling indicates at least one of a candidate control channel quantity or an aggregation level of the first search space. In other words, the higher layer signaling may indicate the aggregation level of the first search space; or may indicate the candidate control channel quantity; or may indicate both the candidate control channel quantity and the aggregation level of the first search space.

Optionally, in another implementation, after determining at least one of the first search space and the second search space, the network device may send at least one piece of first-type DCI in the first search space or send at least one piece of second-type DCI in the second search space; or the network device sends at least one piece of first-type DCI in the first search space and sends at least one piece of second-type DCI in the second search space. For example, if the network device determines only the first search space, the network device may only send at least one piece of first-type DCI in the first search space; if the network device determines only the second search space, the network device may only send at least one piece of first-type DCI in the first search space; if the network device determines both the first search space and the second search space, the network device may only send at least one piece of first-type DCI in the first search space, or may only send at least one piece of second-type DCI in the second search space, or may both send at least one piece of first-type DCI in the first search space and send at least one piece of second-type DCI in the second search space.

It should be noted herein that, content related to the first search space, the second search space, the first time length, the second time length, the first-type DCI, and the second-type DCI is described relatively briefly in this embodiment. For related points, refer to the foregoing embodiments. Details are not described herein again.

FIG. 3 is a schematic structural diagram of an embodiment of a terminal device according to this application. The terminal device may be configured to perform the control information detection method corresponding to FIG. 1. As shown in FIG. 3, the terminal device may include a determining unit 301 and a detection unit 302. Both the determining unit 301 and the detection unit 302 may be implemented by a processor in the terminal device.

The determining unit 301 is configured to determine a first search space and a second search space, where the first search space is a part of the second search space. The detection unit 302 is configured to: detect at least one piece of first-type DCI in the first search space; and detect at least one piece of second-type DCI in the second search space, where the first-type DCI is used to schedule data transmission with a first time length, the second-type DCI is used to schedule data transmission with a second time length, and the first time length is less than the second time length.

Optionally, the second time length is 1 ms, and the second search space includes a PDCCH CSS and a PDCCH UESS.

Optionally, the first-type DCI includes at least first DCI, the second-type DCI includes at least second DCI, and an information bit quantity of the first DCI is the same as an information bit quantity of the second DCI.

Optionally, the detection unit 302 is further configured to detect at least second DCI in a DCI format 1A in the second search space.

The determining unit 301 is specifically configured to determine the first search space based on higher layer signaling, where the higher layer signaling indicates at least one of a candidate control channel quantity and an aggregation level of the first search space.

Optionally, the first search space is a search space including some candidate control channels in the PDCCH UESS.

Optionally, the first search space includes the PDCCH CSS and a search space including some candidate control channels in the PDCCH UESS; and the first-type DCI includes at least the first DCI and third DCI, where the first DCI includes information instructs the terminal device to perform the data transmission with the first time length based on the third DCI.

Optionally, the detection unit 302 is further configured to: detect the third DCI in the PDCCH CSS; and detect the first DCI in the search space including some candidate control channels in the PDCCH UESS; or detect the first DCI in the search space including some candidate control channels in the PDCCH UESS if the terminal device detects the third DCI.

Optionally, the search space including some candidate control channels in the PDCCH UESS includes at least one of the following search spaces: a search space including A candidate control channels with an aggregation level of 1 in the PDCCH UESS; a search space including B candidate control channels with an aggregation level of 2 in the PDCCH UESS; a search space including C candidate control channels with an aggregation level of 4 in the PDCCH UESS; and a search space including D candidate control channels with an aggregation level of 8 in the PDCCH UESS, where A is a positive integer less than 6, B is a positive integer less than 6, C is 1 or 2, and D is 1 or 2.

Optionally, the first search space is the PDCCH CSS, and the detection unit 302 is further configured to detect the third DCI in the PDCCH CSS. Correspondingly, the determining unit 301 is further configured to determine a third search space based on sPDCCH configuration information in the third DCI. If the sPDCCH configuration information indicates that there is no sPDCCH region in a time unit a or b, the third search space includes a search space including some candidate control channels in the PDCCH UESS. If the sPDCCH configuration information indicates that there is an sPDCCH region in a time unit a or b, the third search space is located in the sPDCCH region in the time unit a or b. Correspondingly, the detection unit 302 is further configured to detect the first DCI in the third search space. For details, refer to the description of the foregoing embodiment. The details are not described herein again.

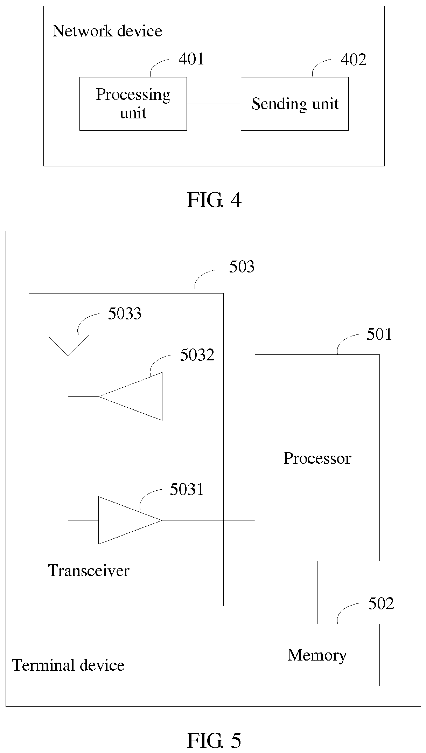

FIG. 4 is a schematic structural diagram of an embodiment of a network device according to this application. The network device may be configured to perform the control information sending method corresponding to FIG. 2. As shown in FIG. 4, the network device may include a processing unit 401 and a sending unit 402.

The processing unit 401 is configured to determine at least one of a first search space and a second search space, where the first search space is a part of the second search space. The sending unit 402 is configured to send at least one piece of downlink control information DCI in the at least one search space, where the at least one piece of DCI is at least one of first-type DCI and second-type DCI, the first-type DCI is carried by the first search space, the second-type DCI is carried by the second search space, the first-type DCI is used to schedule data transmission with a first time length, the second-type DCI is used to schedule data transmission with a second time length, and the first time length is less than the second time length.

Optionally, the second time length is 1 ms; and the second search space includes a physical downlink control channel common search space PDCCH CSS and a physical downlink control channel user equipment-specific search space PDCCH UESS.

Optionally, the first-type DCI includes at least first DCI, the second-type DCI includes at least second DCI, and an information bit quantity of the first DCI is the same as an information bit quantity of the second DCI.

Optionally, the sending unit 402 is further configured to send at least second DCI in a DCI format 1A in the second search space.

Optionally, the sending unit 402 is further configured to send higher layer signaling, where the higher layer signaling indicates at least one of a candidate control channel quantity and an aggregation level of the first search space.

Optionally, the first search space is a search space including some candidate control channels in the PDCCH UESS.

Optionally, the first search space includes the PDCCH CSS and a search space including some candidate control channels in the PDCCH UESS; and the first-type DCI includes at least the first DCI and third DCI, where the first DCI includes information instructs the terminal device to perform the data transmission with the first time length based on the third DCI.

Optionally, the sending unit 402 is further configured to: send the third DCI in the PDCCH CSS; or send the first DCI in the search space including some candidate control channels in the PDCCH UESS; or send the third DCI in the PDCCH CSS, and send the first DCI in the search space including some candidate control channels in the PDCCH UESS.

Optionally, the search space including some candidate control channels in the PDCCH UESS includes at least: a search space including A candidate control channels with an aggregation level of 1 in the PDCCH UESS; or a search space including B candidate control channels with an aggregation level of 2 in the PDCCH UESS; or a search space including C candidate control channels with an aggregation level of 4 in the PDCCH UESS; or a search space including D candidate control channels with an aggregation level of 8 in the PDCCH UESS, where A is a positive integer less than 6, B is a positive integer less than 6, C is 1 or 2, and D is 1 or 2.

FIG. 5 is a schematic structural diagram of another embodiment of a terminal device according to this application.

The terminal device may be a terminal device in any one of the foregoing embodiments, and may be configured to perform the method steps in the control information detection method shown in FIG. 1.

As shown in FIG. 5, the terminal device may include a processor 501, a memory 502, and a transceiver 503. The transceiver 503 may include components such as a receiver 5031, a transmitter 5032, and an antenna 5033. The terminal device may further include more or fewer components, or combine some components, or have different component arrangements. This is not limited in this application.

The processor 501 is a control center of the terminal device, connects all parts of the entire terminal device by using various interfaces and lines, and performs various functions of the terminal device and/or processes data by operating or executing a software program and/or a module stored in the memory 502 and invoking data stored in the memory. The processor 501 may include an integrated circuit (integrated circuit, IC), for example, may include a single packaged IC, or may include a plurality of packaged ICs that have a same function or different functions. For example, the processor may include only a central processing unit (central processing unit, CPU), or may be a combination of a GPU, a digital signal processor (digital signal processor, DSP), and a control chip (such as a baseband chip) in the transceiver 503. In an implementation of this application, the CPU may be a single operation core, or may include a plurality of operation cores.

The transceiver 503 is configured to establish a communication channel, so that the terminal device is connected to a receiving device through the communication channel, thereby implementing data transmission between terminal devices. The transceiver 503 may include a communications module such as a wireless local area network (wireless local area network, WLAN) module, a Bluetooth module, or a baseband (baseband) module, and a radio frequency (radio frequency, RF) circuit corresponding to the communications module, and is configured to perform wireless local area network communication, Bluetooth communication, infrared communication, and/or cellular communications system communication, such as Wideband Code Division Multiple Access (wideband code division multiple access, WCDMA) and/or High Speed Downlink Packet Access (high speed downlink packet access, HSDPA). The transceiver 503 is configured to control communication between the components in the terminal device and can support direct memory access (direct memory access).

In different implementations of this application, various transceivers 503 in the transceiver 503 are usually in a form of an integrated circuit chip (integrated circuit chip) and can be selectively combined without including all the transceivers 503 and corresponding antenna groups. For example, the transceiver 503 may include only a baseband chip, a radio frequency chip, and a corresponding antenna to provide a communication function in a cellular communications system. The terminal device may be connected to a cellular network (cellular network) or the Internet (internet) through a wireless communication connection established by the transceiver 503, such as wireless local area network access or WCDMA access. In some optional implementations of this application, the communications module such as a baseband module in the transceiver 503 may be integrated into the processor, typically, such as an APQ+MDM series platform provided by Qualcomm (Qualcomm). The radio frequency circuit is configured to receive and send signals during an information receiving and sending process or during a call. For example, downlink information of the network device is received and then sent to the processor for processing. In addition, related uplink data is sent to the network device. Usually, the radio frequency circuit includes a well-known circuit for performing these functions, including but not limited to an antenna system, a radio frequency transceiver, one or more amplifiers, a tuner, one or more oscillators, a digital signal processor, a codec (codec) chip set, a subscriber identity module (SIM) card, a memory, and the like. In addition, the radio frequency circuit may further communicate with a network and another device through wireless communication. The wireless communication may use any communications standard or protocol, including but not limited to, a Global System for Mobile Communications (Global System for Mobile Communications, GSM), a general packet radio service (general packet radio service, gprs), Code Division Multiple Access (code division multiple access, CDMA), Wideband Code Division Multiple Access (wideband code division multiple access, WCDMA), High Speed Uplink Packet Access (high speed uplink packet access, HSUPA), Long Term Evolution (long term evolution, LTE), email, a short message service (short messaging service, SMS), and the like.

In this embodiment of this application, the terminal device may be configured to implement the method steps included in the control information detection method in the foregoing embodiment. A function to be implemented by the determining unit 301 may be implemented by the processor 501, and may be represented as the processor 501 in hardware. A function to be implemented by the detection unit 302 sending unit may be implemented by the processor 501 of the terminal device, or may be implemented by the transceiver 503 controlled by the processor 501, and in hardware, may be represented as the processor 501, or represented as a combination of the processor 501 and the transceiver 503.

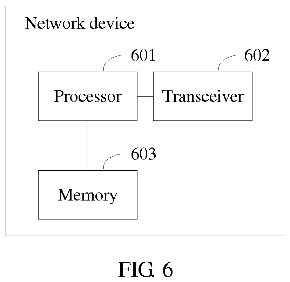

FIG. 6 is a schematic structural diagram of another embodiment of a network device according to this application. The network device in this embodiment may be configured to perform the method steps in the control information sending method shown in FIG. 1. As shown in FIG. 6, the network device may include a processor 601, a memory 602, a transceiver 603, and the like.

The processor 601 is a control center of the network device, connects all parts of the entire network device by using various interfaces and lines, and performs various functions of the network device and/or processes data by operating or executing a software program and/or a module stored in the memory and invoking data stored in the memory. The processor may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory 602 may include a volatile memory (volatile memory), for example, a random access memory (random access memory, RAM), or may include a non-volatile memory (non-volatile memory), for example, a flash memory (flash memory), a hard disk (hard disk drive, HDD), or a solid state drive (solid state drive, SSD). The memory may alternatively include a combination of the foregoing types of memories. The memory may store a program or code. A processor in a network element can implement a function of the network element by executing the program or the code.

In this embodiment of this application, the network device may be configured to implement the method steps included in the control information sending method in the foregoing embodiment. A function to be implemented by the processing unit 401 may be implemented by the processor 601, and may be represented as the processor 601 in hardware. A function to be implemented by the detection unit 302 may be implemented by the processor 601 of the terminal device, or may be implemented by the transceiver 603 controlled by the processor 601, and in hardware, may be represented as the processor 601, or represented as a combination of the processor 601 and the transceiver 603.

During specific implementation, this application further provides a computer storage medium. The computer storage medium may store a program. When the program is executed, some or all of the steps in the embodiments of the control information detection method or the control information sending method provided in this application can be performed. The storage medium may be a magnetic disk, an optical disc, a read-only memory (read-only memory, ROM), a random access memory (random access memory, RAM), or the like.

A person skilled in the art may clearly understand that, the technologies in the embodiments of this application may be implemented by software in addition to a necessary general hardware platform. Based on such an understanding, the technical solutions in the embodiments of this application essentially or the part contributing to the prior art may be implemented in a form of a software product. The computer software product may be stored in a storage medium, such as a ROM/RAM, a magnetic disk, or an optical disc, and includes several instructions for instructing a computer device (which may be a personal computer, a server, a network device, or the like) to perform the methods described in the embodiments or some parts of the embodiments of this application.

For same and similar parts in the embodiments in this specification, mutual reference may be made between these embodiments. Especially, the device embodiment is basically similar to a method embodiment, and therefore is described briefly. For related parts, refer to descriptions in the method embodiment.

It should be noted herein that, each embodiment of this application is described by using an LTE system as an example. However, this does not mean that the embodiments of this application are applicable only to the LTE system. Actually, the solutions provided in the embodiments of this application can be used for any wireless communications system that performs data transmission through scheduling.

## Claims

1. A control information detection method, comprising:
determining (101), by a terminal device, a first search space and a second search space, wherein the first search space is a part of the second search space;
detecting (102), by the terminal device, at least one piece of first-type downlink control information, DCI in the first search space; and
detecting (102), by the terminal device, at least one piece of second-type DCI in the second search space, wherein
the first-type DCI is used to schedule data transmission with a first time length, the second-type DCI is used to schedule data transmission with a second time length, and the first time length is less than the second time length;
wherein the determining the first search space comprises:
determining, by the terminal device, the first search space based on higher layer signaling, wherein,
the higher layer signaling indicates at least one of a candidate control channel quantity and an aggregation level of the first search space.

2. The method according to claim 1, wherein
the second time length is 1 ms; and
the second search space comprises a physical downlink control channel common search space, PDCCH CSS and a physical downlink control channel user equipment-specific search space, PDCCH UESS.

3. The method according to claim 1 or 2, wherein the determining, by a terminal device, a second search space comprises:
determining, by the terminal device, the second search space based on the higher layer signaling, wherein,
the higher layer signaling indicates at least one of a candidate control channel quantity and an aggregation level of the second search space.

4. The method according to any one of claims 1 to 3, wherein
the first search space is a search space consisting of part of candidate control channels in the PDCCH UESS.

5. The method according to claim 4, wherein the search space consisting of part of candidate control channels in the PDCCH UESS comprises at least one of the following search spaces:
a search space consisting of first A candidate control channels with an aggregation level of 1 in the PDCCH UESS;
a search space consisting of first B candidate control channels with an aggregation level of 2 in the PDCCH UESS;
a search space consisting of first C candidate control channels with an aggregation level of 4 in the PDCCH UESS; and
a search space consisting of first D candidate control channels with an aggregation level of 8 in the PDCCH UESS, wherein
A is a positive integer less than 6, B is a positive integer less than 6, C is 1 or 2, and D is 1 or 2.

6. The method according to any one of claims 1 to 5, wherein:
the second time length is 1 ms, and the first time length is 2 symbols or 3 symbols;
the second time length is 1 ms, and the first time length is one of 1, 2 or 3 symbols;
the second time length is 1 ms, and the first time length is 4 symbols;
the second time length is 1 ms, and the first time length is 7 symbols; or
the second time length is 1 ms, and the first time length is 6 symbols.

7. A terminal device, comprising:
determining unit (301) for determining a first search space and a second search space, wherein the first search space is a part of the second search space; and
detection unit (302) for detecting at least one piece of first-type downlink control information, DCI in the first search space; and detect at least one piece of second-type DCI in the second search space, wherein the first-type DCI is used to schedule data transmission with a first time length, the second-type DCI is used to schedule data transmission with a second time length, and the first time length is less than the second time length, wherein
the determining unit (301) is configured to determine a first search space based on higher layer signaling, wherein the higher layer signaling indicates at least one of a candidate control channel quantity and an aggregation level of the first search space.

8. The terminal device according to claim 7, wherein
the second time length is 1 ms; and
the second search space comprises a physical downlink control channel common search space, PDCCH CSS and a physical downlink control channel user equipment-specific search space, PDCCH UESS.

9. The terminal device according to claim 8, wherein
the first search space is a search space consisting of part of candidate control channels in the PDCCH UESS.

10. The terminal device according to claim 9, wherein the search space consisting of part of candidate control channels in the PDCCH UESS comprises at least one of the following search spaces:
a search space consisting of first A candidate control channels with an aggregation level of 1 in the PDCCH UESS;
a search space consisting of first B candidate control channels with an aggregation level of 2 in the PDCCH UESS;
a search space consisting of first C candidate control channels with an aggregation level of 4 in the PDCCH UESS; and
a search space consisting of first D candidate control channels with an aggregation level of 8 in the PDCCH UESS, wherein
A is a positive integer less than 6, B is a positive integer less than 6, C is 1 or 2, and D is 1 or 2.

11. The terminal device according to any one of claims 7 to 10, wherein:
the second time length is 1 ms, and the first time length is 2 symbols or 3 symbols;
the second time length is 1 ms, and the first time length is one of 1, 2 or 3 symbols;
the second time length is 1 ms, and the first time length is 4 symbols;
the second time length is 1 ms, and the first time length is 7 symbols; or
the second time length is 1 ms, and the first time length is 6 symbols.

12. A computer readable storage medium, comprising an instruction, and when the instruction is run on a computer, the computer performs the method according to any one of claims 1 to 6.

13. A computer program product, wherein when the computer program product is run on a computer, the computer performs the method according to any one of claims 1 to 6.

## Patentansprüche

1. Verfahren zum Erkennen von Steuerinformationen, umfassend:
Ermitteln (101), durch eine Endgerätevorrichtung, eines ersten Suchraums und eines zweiten Suchraums, wobei der erste Suchraum ein Teil des zweiten Suchraums ist; Erkennen (102), durch die Endgerätevorrichtung, von mindestens einem Bestandteil von Downlink-Steuerinformationen, DCI, eines ersten Typs in dem ersten Suchraum; und
Erkennen (102), durch die Endgerätevorrichtung, von mindestens einem Bestandteil von DCI eines zweiten Typs in dem zweiten Suchraum; und wobei die DCI des ersten Typs verwendet werden, um eine Datenübertragung mit einer ersten Zeitdauer zu planen, die DCI des zweiten Typs verwendet werden, um eine Datenübertragung mit einer zweiten Zeitdauer zu planen, und die erste Zeitdauer kürzer als die zweite Zeitdauer ist;
wobei das Ermitteln des ersten Suchraums umfasst:
Ermitteln, durch die Endgerätevorrichtung, des ersten Suchraums aufgrund einer Signalisierung einer oberen Schicht, wobei
die Signalisierung einer oberen Schicht mindestens eine anzeigt von einer Kandidatensteuerkanalanzahl und einer Aggregationsebene des ersten Suchraums.

2. Verfahren nach Anspruch 1, wobei
die zweite Zeitdauer 1 ms beträgt; und
der zweite Suchraum einen gemeinsamen Suchraum eines physischen Downlink-Steuerkanals (Physical Downlink Control Channel Common Search Space, PDCCH CSS) und einen benutzergerätespezifischen Suchraum eines physischen Downlink-Steuerkanals (Physical Downlink Control Channel User Equipment-Specific Search Space, PDCCH UESS) umfasst.

3. Verfahren nach Anspruch 1 oder 2, wobei das Ermitteln eines zweiten Suchraums durch eine Endgerätevorrichtung umfasst:
Ermitteln, durch die Endgerätevorrichtung, des zweiten Suchraums aufgrund einer Signalisierung einer oberen Schicht, wobei
die Signalisierung einer oberen Schicht mindestens eine anzeigt von einer Kandidatensteuerkanalanzahl und einer Aggregationsebene des zweiten Suchraums.

4. Verfahren nach einem der Ansprüche 1 bis 3, wobei:
der erste Suchraum ein Suchraum ist, der aus einem Teil der Kandidatensteuerkanäle in dem PDCCH UESS besteht.

5. Verfahren nach Anspruch 4, wobei der Suchraum, der aus einem Teil der Kandidatensteuerkanäle in dem in dem PDCCH UESS besteht, mindestens einen der folgenden Suchräume umfasst:
einen Suchraum, der aus ersten A Kandidatensteuerkanälen mit einer Aggregationsebene von 1 in dem PDCCH UESS besteht;
einen Suchraum, der aus ersten B Kandidatensteuerkanälen mit einer Aggregationsebene von 2 in dem PDCCH UESS besteht;
einen Suchraum, der aus ersten C Kandidatensteuerkanälen mit einer Aggregationsebene von 4 in dem PDCCH UESS besteht; und
einen Suchraum, der aus ersten D Kandidatensteuerkanälen mit einer Aggregationsebene von 8 in dem PDCCH UESS besteht, wobei:
A eine positive ganze Zahl kleiner als 6 ist, B eine positive ganze Zahl kleiner als 6 ist, C 1 oder 2 ist, und D 1 oder 2 ist.

6. Verfahren nach einem der Ansprüche 1 bis 5, wobei:
die zweite Zeitdauer 1 ms beträgt und die erste Zeitdauer 2 Symbole oder 3 Symbole beträgt;
die zweite Zeitdauer 1 ms beträgt und die erste Zeitdauer eines von 1, 2 oder 3 Symbolen beträgt;
die zweite Zeitdauer 1 ms beträgt und die erste Zeitdauer 4 Symbole beträgt;
die zweite Zeitdauer 1 ms beträgt und die erste Zeitdauer 7 Symbole beträgt; oder
die zweite Zeitdauer 1 ms beträgt und die erste Zeitdauer 6 Symbole beträgt.

7. Endgerätevorrichtung, umfassend:
eine Ermittlungseinheit (301) zum Ermitteln eines ersten Suchraums und eines zweiten Suchraums, wobei der erste Suchraum ein Teil des zweiten Suchraums ist; und
eine Erkennungseinheit (302) zum Erkennen von mindestens einem Bestandteil von Downlink-Steuerinformationen, DCI, eines ersten Typs in dem ersten Suchraum; und zum Erkennen von mindestens einem Bestandteil von DCI eines zweiten Typs in dem zweiten Suchraum; und wobei die DCI des ersten Typs verwendet werden, um eine Datenübertragung mit einer ersten Zeitdauer zu planen, wobei die DCI des zweiten Typs verwendet werden, um eine Datenübertragung mit einer zweiten Zeitdauer zu planen, und wobei die erste Zeitdauer kürzer als die zweite Zeitdauer ist, wobei die Ermittlungsteileinheit (301) konfiguriert ist zum Ermitteln eines ersten Suchraums aufgrund einer Signalisierung einer oberen Schicht, wobei die Signalisierung einer oberen Schicht mindestens eine anzeigt von einer Kandidatensteuerkanalanzahl und einer Aggregationsebene des ersten Suchraums.

8. Endgerätevorrichtung nach Anspruch 7, wobei:
die zweite Zeitdauer 1 ms beträgt; und
der zweite Suchraum einen gemeinsamen Suchraum eines physischen Downlink-Steuerkanals (Physical Downlink Control Channel Common Search Space, PDCCH CSS) und einen benutzergerätespezifischen Suchraum eines physischen Downlink-Steuerkanals (Physical Downlink Control Channel User Equipment-Specific Search Space, PDCCH UESS) umfasst.

9. Endgerätevorrichtung nach Anspruch 8, wobei:
der erste Suchraum ein Suchraum ist, der aus einem Teil der Kandidatensteuerkanäle in dem PDCCH UESS besteht.

10. Endgerätevorrichtung nach Anspruch 9, wobei der Suchraum, der aus einem Teil der Kandidatensteuerkanäle in dem PDCCH UESS besteht, mindestens einen der folgenden Suchräume umfasst:
einen Suchraum, der aus ersten A Kandidatensteuerkanälen mit einer Aggregationsebene von 1 in dem PDCCH UESS besteht;
einen Suchraum, der aus ersten B Kandidatensteuerkanälen mit einer Aggregationsebene von 2 in dem PDCCH UESS besteht;
einen Suchraum, der aus ersten C Kandidatensteuerkanälen mit einer Aggregationsebene von 4 in dem PDCCH UESS besteht; und
einen Suchraum, der aus ersten D Kandidatensteuerkanälen mit einer Aggregationsebene von 8 in dem PDCCH UESS besteht, wobei:
A eine positive ganze Zahl kleiner als 6 ist, B eine positive ganze Zahl kleiner als 6 ist, C 1 oder 2 ist, und D 1 oder 2 ist.

11. Endgerätevorrichtung nach einem der Ansprüche 7 bis 10, wobei:
die zweite Zeitdauer 1 ms beträgt und die erste Zeitdauer 2 Symbole oder 3 Symbole beträgt;
die zweite Zeitdauer 1 ms beträgt und die erste Zeitdauer eines von 1, 2 oder 3 Symbolen beträgt;
die zweite Zeitdauer 1 ms beträgt und die erste Zeitdauer 4 Symbole beträgt;
die zweite Zeitdauer 1 ms beträgt und die erste Zeitdauer 7 Symbole beträgt; oder
die zweite Zeitdauer 1 ms beträgt und die erste Zeitdauer 6 Symbole beträgt.

12. Computerlesbares Speichermedium, das einen Befehlssatz umfasst und wobei, wenn der Befehlssatz in einem Computer abläuft, der Computer das Verfahren nach einem der Ansprüche 1 bis 6 ausführt.

13. Computerprogrammprodukt, wobei, wenn das Computerprogrammprodukt in einem Computer abläuft, der Computer das Verfahren nach einem der Ansprüche 1 bis 6 ausführt.

## Revendications

1. Procédé de détection d'informations de commande, comprenant les étapes consistant à :
déterminer (101), par un dispositif terminal, un premier espace de recherche et un deuxième espace de recherche, dans lequel le premier espace de recherche est une partie du deuxième espace de recherche ;
détecter (102), par le dispositif terminal, au moins un élément d'information de commande de liaison descendante d'un premier type, DCI, dans le premier espace de recherche ; et
détecter (102), par le dispositif terminal, au moins un élément DCI d'un deuxième type dans le deuxième espace de recherche, dans lequel
les DCI du premier type sont utilisées pour programmer une transmission de données avec une première durée, les DCI du deuxième type sont utilisées pour programmer une transmission de données avec une deuxième durée, et la première durée est inférieure à la deuxième durée ;
dans lequel la détermination du premier espace de recherche comprend l'étape consistant à :
déterminer, par le dispositif terminal, le premier espace de recherche sur la base de la signalisation de couche supérieure, dans lequel,
la signalisation de couche supérieure indique au moins l'un d'une quantité de canaux de commande candidats et d'un niveau d'agrégation du premier espace de recherche.

2. Procédé selon la revendication 1, dans lequel
la deuxième durée est de 1 ms ; et
le deuxième espace de recherche comprend un espace de recherche commun de canal de commande de liaison descendante physique, PDCCH CSS, et un espace de recherche spécifique à l'équipement d'utilisateur de canal de commande de liaison descendante physique, PDCCH UESS.

3. Procédé selon la revendication 1 ou 2, dans lequel la détermination, par un dispositif terminal, d'un deuxième espace de recherche comprend l'étape consistant à :
déterminer, par le dispositif terminal, le deuxième espace de recherche sur la base de la signalisation de couche supérieure, dans lequel,
la signalisation de couche supérieure indique au moins l'un d'une quantité de canaux de commande candidats et d'un niveau d'agrégation du deuxième espace de recherche.

4. Procédé selon l'une quelconque des revendications 1 à 3, dans lequel le premier espace de recherche est un espace de recherche constitué d'une partie des canaux de commande candidats dans le PDCCH UESS.

5. Procédé selon la revendication 4, dans lequel l'espace de recherche constitué d'une partie des canaux de commande candidats dans le PDCCH UESS comprend au moins l'un des espaces de recherche suivants :
un espace de recherche constitué de A premiers canaux de commande candidats avec un niveau d'agrégation de 1 dans le PDCCH UESS ;
un espace de recherche constitué de B premiers canaux de commande candidats avec un niveau d'agrégation de 2 dans le PDCCH UESS ;
un espace de recherche constitué de C premiers canaux de commande candidats avec un niveau d'agrégation de 4 dans le PDCCH UESS ; et
un espace de recherche constitué de D premiers canaux de commande candidats avec un niveau d'agrégation de 8 dans le PDCCH UESS, dans lequel A est un nombre entier positif inférieur à 6, B est un nombre entier positif inférieur à 6, C est 1 ou 2, et D est 1 ou 2.

6. Procédé selon l'une quelconque des revendications 1 à 5, dans lequel :
la deuxième durée est de 1 ms, et la première durée est de 2 symboles ou de 3 symboles ;
la deuxième durée est de 1 ms, et la première durée est l'un de 1, 2 ou 3 symboles ;
la deuxième durée est de 1 ms, et la première durée est de 4 symboles ;
la deuxième durée est de 1 ms, et la première durée est de 7 symboles ; ou
la deuxième durée est de 1 ms, et la première durée est de 6 symboles.

7. Dispositif terminal comprenant :
une unité de détermination (301) pour déterminer un premier espace de recherche et un deuxième espace de recherche, dans lequel le premier espace de recherche est une partie du deuxième espace de recherche ; et
une unité de détection (302) pour détecter au moins un élément d'information de commande de liaison descendante d'un premier type, DCI, dans le premier espace de recherche ; et détecter au moins un élément DCI d'un deuxième type dans le deuxième espace de recherche, dans lequel les DCI du premier type sont utilisées pour programmer une transmission de données avec une première durée, les DCI du deuxième type sont utilisées pour programmer une transmission de données avec une deuxième durée, et la première durée est inférieure à la deuxième durée, dans lequel l'unité de détermination (301) est configurée pour déterminer un premier espace de recherche sur la base d'une signalisation de couche supérieure, dans lequel la signalisation de couche supérieure indique au moins l'un d'une quantité de canaux de commande candidats et d'un niveau d'agrégation du premier espace de recherche.

8. Dispositif terminal selon la revendication 7, dans lequel
la deuxième durée est de 1 ms ; et
le deuxième espace de recherche comprend un espace de recherche commun de canal de commande de liaison descendante physique, PDCCH CSS, et un espace de recherche spécifique à l'équipement d'utilisateur de canal de commande de liaison descendante physique, PDCCH UESS.

9. Dispositif terminal selon la revendication 8, dans lequel
le premier espace de recherche est un espace de recherche constitué d'une partie des canaux de commande candidats dans le PDCCH UESS.

10. Dispositif terminal selon la revendication 9, dans lequel l'espace de recherche constitué d'une partie des canaux de commande candidats dans le PDCCH UESS comprend au moins l'un des espaces de recherche suivants :
un espace de recherche constitué de premiers canaux de commande candidats A avec un niveau d'agrégation de 1 dans le PDCCH UESS ;
un espace de recherche constitué de B premiers canaux de commande candidats avec un niveau d'agrégation de 2 dans le PDCCH UESS ;
un espace de recherche constitué de C premiers canaux de commande candidats avec un niveau d'agrégation de 4 dans le PDCCH UESS ; et
un espace de recherche constitué de D premiers canaux de commande candidats avec un niveau d'agrégation de 8 dans le PDCCH UESS, dans lequel A est un nombre entier positif inférieur à 6, B est un nombre entier positif inférieur à 6, C est 1 ou 2, et D est 1 ou 2.

11. Dispositif terminal selon l'une quelconque des revendications 7 à 10, dans lequel :
la deuxième durée est de 1 ms, et la première durée est de 2 symboles ou de 3 symboles ;
la deuxième durée est de 1 ms, et la première durée est l'un de 1, 2 ou 3 symboles ;
la deuxième durée est de 1 ms, et la première durée est de 4 symboles ;
la deuxième durée est de 1 ms, et la première durée est de 7 symboles ; ou
la deuxième durée est de 1 ms, et la première durée est de 6 symboles.

12. Support de stockage lisible par ordinateur, comprenant une instruction, et lorsque l'instruction est exécutée sur un ordinateur, l'ordinateur exécute le procédé selon l'une quelconque des revendications 1 à 6.

13. Produit de programme informatique, dans lequel, lorsque le produit de programme informatique est exécuté sur un ordinateur, l'ordinateur exécute le procédé selon l'une quelconque des revendications 1 à 6.
